# EUROPEAN PATENT SPECIFICATION

(11) **EP 2 977 181 B1**
(45) Date of publication and mention of the grant of the patent: **23.05.2018**
(21) Application number: 13879222.1
(22) Date of filing: 27.04.2013
(51) Int. Cl.: B29C 49/56, B29L 22/00

(54) **SYSTEM WITH BOTTOM DIE LIFTING MECHANISM**
SYSTEM MIT UNTERSTEMPEL-HEBEMECHANISMUS
SYSTÈME AVEC MÉCANISME DE LEVAGE DE MATRICE INFÉRIEURE

(30) Priority: 19.03.2013 CN 201310089029
(43) Date of publication of application: 27.01.2016
(73) Proprietor: Jiangsu Newamstar Packaging Machinery Co., Ltd, Zhangjiagang, Jiangsu 215624 (CN)
(72) Inventor: DONG, Hailong, Zhangjiagang Jiangsu 215624 (CN); CHU, Xingan, Zhangjiagang Jiangsu 215624 (CN); SHEN, Xiangyu, Zhangjiagang Jiangsu 215624 (CN); HE, Deping, Zhangjiagang Jiangsu 215624 (CN)
(74) Representative: Baker, Thomas Edward
(86) International application number: PCT/CN2013/074913
(87) International publication number: WO 2014/146322

(56) References cited:
- CN-A- 102 922 731
- CN-A- 102 962 985
- CN-A- 103 171 126
- CN-A- 103 171 127
- CN-U- 203 185 628
- CN-U- 203 185 632
- US-A1- 2007 292 550
- US-A1- 2010 203 185

## Description

### Field of the Invention

The present invention relates to the field of processing device of a beverage bottle, more particularly to an elevating mechanism for a bottom mould.

### Description of the Related Art

In the prior art, as disclosed in the patent publication No. CN 201151189Y, a bottom mould elevating mechanism in a formwork assembly of a bottle blowing machine comprises an elevating bracket and a bottom mould cam. The elevating bracket is provided with a guide rail, a guide rod and a roll wheel. The elevating bracket is mounted into a sliding groove of the machine frame by the guide rail. A spring is sheathed on the guide rod, a wheel shaft protruding towards a side is provided at the bottom of the elevating bracket, and the roll wheel is mounted on the wheel shaft. The bottom mould cam is located above the roll wheel and contacts the roll wheel. The guide rod is mounted on a support plate laterally extending on the top of the elevating bracket and. The spring is located between the support plate and the machine frame. The bottom mould elevating mechanism presses the elevating bracket by means of the bottom mould cam such that the bottom mould descends, and the elevating bracket is uplifted under the effect of the spring such that the bottom mould rises. The elevating mechanism of a bottom mould of the prior art is complicated in configuration and bulky.

US2010/0203185 relates to a device for blow moulding containers. The blow mold which is composed of at least two blow mold segments is held in place by mold supports of a blow molding station (3) that is arranged on a supporting structure (41). A bottom part (7) is used in addition to the blow mold segments. Both the mold supports and the bottom part are arranged in such a way that they can be mechanically positioned. The mold supports and the bottom part are mechanically coupled to each other. One of the mold supports (19) is immobile and the other mold support is swiveled to the supporting structure. The bottom part has a trajectory relative to the mold support which has a component that extends in the longitudinal direction of the blow molding station and a component that extends at a right angle to the longitudinal direction.

US2007/0292550 also relates to a device for blow moulding containers. Initially, pre-forms, which are made of a thermoplastic material, are tempered and, subsequently, transformed into containers inside a blow form using the effects of a pressurized medium. Said blow form which is made up of at least two blow molding segments is held in place by mold supports of a blowing station. A bottom part is used in addition to the blow molding segments. Both the mold supports (19, 20) and the bottom part (7) are arranged in such a way that they can be mechanically positioned. The mold supports and the bottom part are permanently coupled to each other via a common mechanical drive unit (43).

### Summary of the Invention

An object of the invention is to provide an improved elevating mechanism of a bottom mould driven by single shaft.

In order to solve the above technical problem, the following technical solution is utilized in the invention.

According to the present invention there is a system as defined in claim 1.

Preferably, the driving mechanism comprises a swing arm located below the protrusion for driving the rotation shaft, and a power source for driving the swing arm. The power source drives the swing arm to rotate such that the rotation shaft rotates around the axis of rotation.

More preferably, the swing arm is fixedly connected with a lower end of the rotation shaft. The power source drives the rotation of the swing arm, and the rotation shaft rotates with the swing arm.

More preferably, the axis of rotation is parallel to the movement of direction of the elevating rod relative to the machine frame, and the guiding groove inclinedly extends relative to a plane perpendicular to the rotation axis. Herein, the term "inclinedly" means that the central axis of the guiding groove representing the extending direction of the guiding groove is not in the same circumference taking the axis of rotation as its central axis. The extending direction of the guiding groove substantially is neither parallel to the axis of rotation of the rotation shaft, nor perpendicular to the axis of rotation.

More preferably, the protrusion has an arc-shaped side on which the guiding groove is opened, and the central axis of the circumference where the arc-shaped side is and the axis of rotation of the rotation shaft coincide.

Preferably, the machine frame comprises a support frame on which a first through-hole is opened, an upper frame located above the support frame and an upright frame fixedly connected between the support frame and the upper frame, the protrusion is located below the support frame, the elevating rod slidably extends through the first through-hole, and an upper end of the elevating rod is located above the support frame. The arrangement of the components, such as the protrusion, below the support frame may effectively utilize the space below the machine frame, such that the configuration of the whole bottle blowing machine is more compact.

More preferably, a second through-hole is opened on the support frame, and the rotation shaft extends through the second through-hole and is rotatable within the second through-hole.

More preferably, an upper end of the rotation shaft is rotatably connected with the upper frame.

Due to the above technical solution, the present invention has the following advantages as compared with the prior art: in the invention, a protrusion having a guiding groove on it's surface and a sliding block fixedly connected on the elevating rod are utilized, such that the elevating rod can move in up-down direction when the sliding block slides along the guiding groove. The elevating mechanism of the invention is simple in configuration and convenient in operation.

### Brief Description of the Drawings

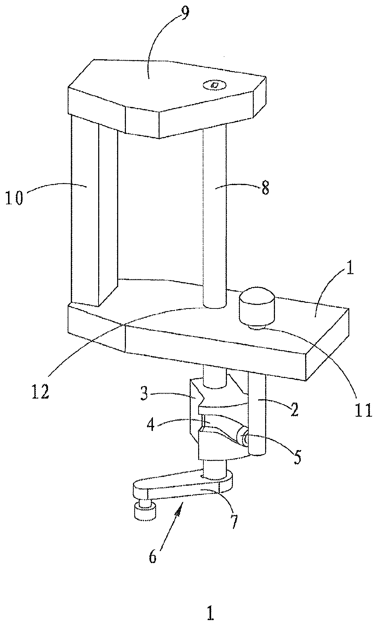

Fig.1 is a schematic drawing of an elevating mechanism according to the invention.

Wherein: 1. a support frame; 11. a first through-hole; 12. a second through-hole; 2. an elevating rod; 3. a protrusion; 4. a guiding groove; 5. a sliding block; 6. a driving mechanism; 7. a swing arm; 8. a rotation shaft; 9. an upper frame; 10. an upright frame.

### Description of the Preferred Embodiments

The present invention will be described hereinafter with reference to the accompanying drawing. It is to be noted, however, that the drawings are given only for illustrative purpose and therefore not to be considered as limiting of its scope, for the invention may admit to other equally effective embodiments.

As shown in fig.1, an elevating mechanism of a bottom mould comprises an elevating rod 2 movable in up-down direction. The bottom mould is mounted on the upper end of the elevating rod 2. The bottom mould is a commonly used component on a bottle blowing machine, and its' configuration is well known for one skilled in the art, and thus not shown in the drawing.

The elevating mechanism also comprises a rotation shaft 8 rotatable around an axis of rotation, a protrusion 3 fixedly connected with the rotation shaft 8, a driving mechanism 6 for driving the rotation of the rotation shaft 8, and a sliding block 5 fixedly connected on the elevating rod 2. A guiding groove 4 is opened on the protrusion 3 and the sliding block 5 is slidably inserted to the guiding groove 4. In the course of rotation of the rotation shaft 8, the guiding groove 4 contacts and supports the sliding block 5 to rise or descend, such that the sliding block 5 moves in up-down direction under the guiding of the guiding groove 4. Correspondingly, the elevating rod 2 rises and descends. The sliding block 5 can utilize a bearing with a shaft.

The rotation shaft 8 shown in fig.1 is configured as a cylinder, and shaft axis of the rotation shaft 8 is it's axis of rotation.

The driving mechanism 6 comprises a swing arm 7 disposed below the protrusion 3, and a power source for driving the rotation of the swing arm 7. One end of the swing arm 7 is fixedly connected with the low end of the rotation shaft 8, and the other end is connected with the power source.

The rotation axis of the rotation shaft 8 is parallel to the movement of direction of elevating rod relative to the machine frame. The guiding groove 4 inclinedly extends relative to a plane perpendicular to the axis of rotation. Herein, the term "inclinedly" means that the central axis of the guiding groove 4 representing the extending direction of the guiding groove 4 is not in the same circumference taking the axis of rotation as its central axis. The extending direction of the guiding groove substantially is neither parallel to the axis of rotation of the rotation shaft 8, nor perpendicular to the axis of rotation. In this case, in the course of rotation of the rotation shaft 8, the sliding block 5 which slidably cooperates with the guiding groove 4 moves in up-down direction under the guiding of the guiding groove 4.

Preferably, the protrusion 3 has an arc-shaped side (not labled in the fig.1, namely, the side facing to the elevating rod 2). The central axis of the circumference where the arc-shaped side is and the rotation axis of the rotation shaft 8 coincide, and the guiding groove 4 is opened on the arc-shaped side.

The mould assembly of the bottle blowing machine comprises a support frame 1 located above the protrusion 3, an upper frame 9 located above the support frame 1 and an upright frame 10 fixedly connected between the support frame 1 and the upper frame 9. A first through-hole 11 for the elevating rod 2 extending through therein and a second through-hole 12 for the rotation shaft 8 extending through therein respectively are opened on the support frame 1, the elevating rod 2 can slide in up-down direction in the first through-hole 11, and the rotation shaft 8 can rotate in the second through-hole 12. The rotation shaft 8 extends through the second through-hole 12, and the upper end of the rotation shaft 8 is rotatably connected with the upper frame 9.

## Claims

1. A system comprising:
a bottle blow moulding machine having a machine frame,
an elevating mechanism for a bottom mould, mounted on the bottle blowing machine,
the elevating mechanism comprising:
an elevating rod (2) which is movably disposed on the machine frame of the bottle blowing machine in up-down direction, the bottom mould being mounted on an upper end of the elevating rod (2),
a rotation shaft (8) rotatable around an axis of rotation;
a driving mechanism (6) for driving the rotation of the rotation shaft (8);
**characterized in that** the elevating mechanism further comprises:
a protrusion (3) fixedly disposed on the rotation shaft (8), and a guiding groove (4) being opened on the protrusion(3);
a sliding block (5) fixedly connected on the elevating rod (2), and the sliding block (5) being slidably inserted into the guiding groove (4);
whereby in the course of rotation of the rotation shaft (8), the contact position of the guiding groove (4) with the sliding block (5) rises or descends, and the sliding block (5) moves in up-down direction under the guiding of the guiding groove (4).

2. The system as claimed in the claim 1, wherein the driving mechanism (6) comprises a swing arm (7) located below the protrusion (3) for driving the rotation shaft (8), and a power source for driving the rotation of the swing arm (7) to further drive the rotation of the rotation shaft (8).

3. The system as claimed in the claim 2, wherein the swing arm (7) is fixedly connected with a lower end of the rotation shaft (8).

4. The system as claimed in the claim 1, wherein the axis of rotation is parallel to the direction of movement of the elevating rod (2) relative to the machine frame, and the guiding groove (4) inclinedly extending relative to a plane perpendicular to the axis of rotation.

5. The system as claimed in the claim 4, wherein the protrusion has an arc-shaped side on which the guiding groove (4) is opened, and the central axis of the circumference where the arc-shaped side is and the axis of rotation of the rotation shaft (8) coincide.

6. The system as claimed in any of claims 1-5, wherein the machine frame comprises a support frame (1) on which a first through-hole (11) is opened, an upper frame (9) located above the support frame (1) and an upright frame (10) fixedly connected between the support frame (1) and the upper frame (9), the protrusion (3) being located below the support frame (1), the elevating rod (2) slidably extending through the first through-hole (11), and an upper end of the elevating rod (2) being located above the support frame (1).

7. The system as claimed in claim 6, wherein a second through-hole (12) is opened on the support frame (1), the rotation shaft (8) extending through the second through-hole (12) and being rotatable within the second through-hole (12).

8. The system as claimed in claim 6, wherein an upper end of the rotation shaft (8) is rotatably connected with the upper frame (9).

## Patentansprüche

1. System, umfassend:
eine Flaschenblasformmaschine, die einen Maschinenrahmen aufweist,
einen Hebemechanismus für eine untere Form, die an der Flaschenblasformmaschine angebracht ist,
der Hebemechanismus umfassend:
eine Hebestange (2), welche bewegbar an dem Maschinenrahmen der Flaschenblasformmaschine in der Oben-Unten-Richtung angeordnet ist, wobei die untere Form an einem oberen Ende der Hebestange (2) angebracht ist,
eine Drehwelle (8), die um eine Drehachse herum drehbar ist;
einen Antriebsmechanismus (6) zum Antreiben der Drehung der Drehwelle (8); **dadurch gekennzeichnet, dass** der Hebemechanismus ferner Folgendes umfasst:
einen Vorsprung (3), der fest an der Drehwelle (8) angeordnet ist, und eine Führungsnut (4), die auf dem Vorsprung (3) geöffnet ist;
einen Gleitblock (5), der mit der Hebestange (2) fest verbunden ist, und wobei der Gleitblock (5) gleitfähig in die Führungsnut (4) eingesetzt ist;
wobei im Verlauf einer Drehung der Drehwelle (8) sich die Kontaktposition der Führungsnut (4) mit dem Gleitblock (5) hebt oder senkt und sich der Gleitblock (5) unter der Führung der Führungsnut (4) in der Oben-Unten-Richtung bewegt.

2. System nach Anspruch 1, wobei der Antriebsmechanismus (6) einen Schwenkarm (7) zum Antreiben der Drehwelle (8) umfasst, der sich unter dem Vorsprung (3) befindet, und eine Energiequelle zum Antreiben der Drehung des Schwenkarms (7), um die Drehung der Drehwelle (8) weiter anzutreiben.

3. System nach Anspruch 2, wobei der Schwenkarm (7) mit einem unteren Ende der Drehwelle (8) fest verbunden ist.

4. System nach Anspruch 1, wobei die Drehachse parallel zu der Bewegungsrichtung der Hebestange (2) bezogen auf den Maschinenrahmen verläuft und die Führungsnut (4) sich geneigt bezogen auf eine Ebene senkrecht zu der Drehachse erstreckt.

5. System nach Anspruch 4, wobei der Vorsprung eine bogenförmige Seite aufweist, auf welcher die Führungsnut (4) geöffnet ist, und die Mittelachse des Umfangs, wo sich die bogenförmige Seite befindet, und die Drehachse der Drehwelle (8) zusammenfallen.

6. System nach einem der Ansprüche 1 bis 5, wobei der Maschinenrahmen einen Tragrahmen (1), auf welchem ein erstes Durchgangsloch (11) geöffnet ist, einen oberen Rahmen (9), der sich über dem Tragrahmen (1) befindet, und einen aufrechten Rahmen (10), der zwischen dem Tragrahmen (1) und dem oberen Rahmen (9) fest verbunden ist, umfasst, wobei sich der Vorsprung (3) unter dem Tragrahmen (1) befindet, sich die Hebestange (2) gleitfähig durch das erste Durchgangsloch (11) erstreckt und sich ein oberes Ende der Hebestange (2) über dem Tragrahmen (1) befindet.

7. System nach Anspruch 6, wobei ein zweites Durchgangsloch (12) auf dem Tragrahmen (1) geöffnet ist, wobei sich die Drehwelle (8) durch das zweite Durchgangsloch (12) erstreckt und innerhalb des zweiten Durchgangslochs (12) drehbar ist.

8. System nach Anspruch 6, wobei ein oberes Ende der Drehwelle (8) drehbar mit dem oberen Rahmen (9) verbunden ist.

## Revendications

1. Système, comprenant :
une machine de moulage de soufflage de bouteille ayant un châssis de machine,
un mécanisme de levage pour un moule de fond, monté sur la machine de moulage de bouteille,
le mécanisme de levage comprenant :
une tige de levage (2) qui est disposée de manière mobile sur le châssis de machine de la machine de soufflage de bouteilles vers le haut et vers le bas, le moule inférieur étant monté sur une extrémité supérieure de la tige de levage (2),
un arbre de rotation (8) pouvant tourner autour d'un axe de rotation ;
un mécanisme d'entraînement (6) pour entraîner la rotation de l'arbre de rotation (8) ;
**caractérisé en ce que** le mécanisme de levage comprend en outre :
une saillie (3) disposée de manière fixe sur l'arbre de rotation (8), et une rainure de guidage (4) ouverte sur la saillie (3) ;
un bloc coulissant (5) relié de manière fixe sur la tige de levage (2), et le bloc coulissant (5) étant inséré de manière coulissante dans la rainure de guidage (4) ;
moyennant quoi lors de la rotation de l'arbre de rotation (8), la position de contact de la rainure de guidage (4) avec le bloc coulissant (5) montant ou descendant, et le bloc coulissant (5) se déplaçant vers le haut et vers le bas sous le guidage de la rainure de guidage (4).

2. Système selon la revendication 1, le mécanisme d'entraînement (6) comprenant un bras oscillant (7) situé sous la saillie (3) pour entraîner l'arbre de rotation (8), et une source d'alimentation pour entraîner la rotation du bras oscillant (7) pour entraîner davantage la rotation de l'arbre de rotation (8).

3. Système selon la revendication 2, le bras oscillant (7) étant relié de manière fixe à une extrémité inférieure de l'arbre de rotation (8).

4. Système selon la revendication 1, l'axe de rotation étant parallèle à la direction de déplacement de la tige de levage (2) par rapport au châssis de machine, et la rainure de guidage (4) s'étendant de manière inclinée par rapport à un plan perpendiculaire à l'axe de rotation.

5. Système selon la revendication 4, la saillie ayant un côté en forme d'arc sur lequel la rainure de guidage (4) est ouverte, et l'axe central de la circonférence où se trouve le côté en forme d'arc et l'axe de rotation de l'arbre de rotation (8) coïncidant.

6. Système selon l'une quelconque des revendications 1 à 5, le châssis de machine comprenant un cadre de support (1) sur lequel un premier trou traversant (11) est ouvert, un cadre supérieur (9) situé au-dessus du cadre de support (1) et un cadre vertical (10) relié de manière fixe entre le cadre de support (1) et le cadre supérieur (9), la saillie (3) étant située en dessous du cadre de support (1), la tige de levage (2) s'étendant de manière coulissante à travers le premier trou traversant (11), et une extrémité supérieure de la tige de levage (2) étant située au-dessus du cadre de support (1).

7. Système selon la revendication 6, un second trou traversant (12) étant ouvert sur le cadre de support (1), l'arbre de rotation (8) s'étendant à travers le second trou traversant (12) et pouvant tourner à l'intérieur du second trou traversant (12).

8. Système selon la revendication 6, une extrémité supérieure de l'arbre de rotation (8) étant reliée de manière rotative au cadre supérieur (9).
